(19) **Europäisches Patentamt / European Patent Office / Office européen des brevets**

(11) **EP 2 135 672 A1**

(12) # EUROPEAN PATENT APPLICATION
published in accordance with Art. 153(4) EPC

(43) Date of publication:
**23.12.2009 Bulletin 2009/52**

(21) Application number: **08740597.3**

(22) Date of filing: **17.04.2008**

(51) Int Cl.:
**B01J 23/34** (2006.01)     **B01D 53/94** (2006.01)
**F01N 3/02** (2006.01)     **F01N 3/10** (2006.01)
**F01N 3/24** (2006.01)

(86) International application number:
**PCT/JP2008/057535**

(87) International publication number:
**WO 2008/130010 (30.10.2008 Gazette 2008/44)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.04.2007 JP 2007108872**

(71) Applicant: **Nissan Motor Co., Ltd.
Kanagawa 221-0023 (JP)**

(72) Inventor: **The designation of the inventor has not yet been filed**

(74) Representative: **Hager, Thomas Johannes et al
Hoefer & Partner
Patentanwälte
Pilgersheimer Strasse 20
81543 München (DE)**

(54) **OXIDATION CATALYST COMPOSITION AND PM OXIDATION CATALYST**

(57)     [Object] To provide an oxidation catalyst composition excellent in low temperature activity and a PM oxidation catalyst which can oxidize or burn particulate and the like from an internal combustion engine even at relatively low temperatures.

[Solving means] An oxidation catalyst composition contains cerium, manganese, and a metal M (M is a trivalent metal element excluding cerium). When the oxidation catalyst composition is analyzed by XPS so that orbital energies are subjected to peak separation using the Gaussian function, the $Ce^{4+}$ / $Ce^{3+}$ atomic weight ratio (atomic % ratio) is 1.7 or higher and $Mn^{2+}$ is in an amount of 5 atomic % or larger, wherein at least a part of the oxidation catalyst composition forms a composite.

The above-mentioned metal M is ytterbium, thulium, erbium, holmium, dysprosium, gadolinium, europium, samarium, promethium, neodymium, praseodymium, scandium, yttrium, aluminum, gallium and/or the like.

**Description**

**TECHNICAL FIELD**

This invention relates to an oxidation catalyst composition and a PM oxidation catalyst, more particularly to an oxidation catalyst composition excellent in low temperature activity and a catalyst using this, or a PM oxidation catalyst by which particulate and the like from an internal combustion engine and the like can be oxidized or burnt even at relatively low temperatures.

**BACKGROUND ART**

Hitherto, the following method of regenerating a particulate filter is known in a diesel engine: Trapped particulate matter (PM) is subjected to oxidation or burning by raising the temperature of it under supply of electric power and the like or under consumption of fuel. However, regeneration under supply of electric power and the like unavoidably increases the amount of energy to be supplied; and regeneration by fuel unavoidably lowers a fuel economy.
In view of the above background, a catalyst is used to burn PM at low temperatures in order to lower an electric power consumption and to improve a fuel economy, in which improvements are being made on material and components of the catalyst.
For example, $Ce_x$-Zry-$Pr_x$ (x = 0 to 0.3 mol %) is proposed to be used as a three-way catalyst (see, for example, Patent Citation 1).
Additionally, it is proposed to use Ce-Zr-M (M =La, Sm, Nd, Gd, Sc or Y) (see, for example, Patent Citation 2).

Patent Citation 1: Japanese Patent No. 3657620
Patent Citation 2: Japanese Patent No. 3528839

**DISCLOSURE OF THE INVENTION**

**PROBLEMS TO BE SOLVED BY THE INVENTION**

However, such conventional methods leave room for improvement in points of exhibiting an oxidation activity even at low temperatures and lowering PM oxidation temperatures.
This invention has been made in view of such problems which the conventional techniques have, and has an object to provide an oxidation catalyst composition excellent in low temperature activity and a PM oxidation catalyst which can oxidize or burn particulate and the like from an internal combustion engine even at relatively low temperatures.

**MEANS FOR SOLVING THE PROBLMS**

The present inventors have conducted eager studies in order to attain the above object. As a result, it has been found to attain the above object by suitably using a certain metal together with cerium and manganese.
That is, an oxidation catalyst composition according to the present invention is characterized by containing cerium and manganese, and a metal M (M is a trivalent metal element excluding cerium),
wherein when the oxidation catalyst composition is analyzed by XPS (X-ray Photoelectron Spectroscopy) so that orbital energies are subjected to peak separation using the Gaussian function, the $Ce^{4+}$ / $Ce^{3+}$ atomic weight ratio (atomic % ratio) is 1.7 or higher and $Mn^{2+}$ is in an amount of 5 atomic % or larger,
wherein at least a part of the oxidation catalyst composition forms a composite.
Additionally, a PM oxidation catalyst according to the present invention is characterized by including the oxidation catalyst composition as mentioned above so as to oxidize hydrocarbons, carbon monoxide and particulate matter emitted from an internal combustion engine.

EFFECTS OF THE INVENION

According to the present invention, a certain metal is suitably used together with cerium and manganese, thereby providing an oxidation catalyst composition excellent in low temperature activity and a PM oxidation catalyst which can oxidize or burn particulate and the like from an internal combustion engine even at relatively low temperatures.

**THE BEST MODE FOR CARRYING OUT THE INVENTION**

Hereinafter, the oxidation catalyst composition according to the present invention will be discussed further in detail. In the specification, [%] for concentration, content, blended amount and the like are represented by "mass percent" unless otherwise specified.

As discussed above, the oxidation catalyst composition according to the present invention contains cerium and manganese, and a metal M (M is a trivalent metal element excluding cerium), wherein at least a part of the oxidation catalyst composition forms a composite or compound. Additionally, when the oxidation catalyst composition is analyzed by XPS (X-ray Photoelectron Spectroscopy) so that orbital energies are subjected to peak separation using the Gaussian function, the $Ce^{4+}$ / $Ce^{3+}$ atomic weight ratio (atomic % ratio) is 1.7 or higher and $Mn^{2+}$ is in an amount of 5 atomic % or larger.

Here, the metal M may be metal elements except for cerium, and therefore concrete examples of the metal M are ytterbium (Yb), thulium (Tm), erbium (Er), holmium (Ho), dysprosium (Dy), gadolinium (Gd), europium (Eu), samarium (Sm), promethium (Pm), neodymium (Nd), praseodymium (Pr), scandium (Sc), yttrium (Y), aluminum (Al), gallium (Ga), and any combinations thereof.

Additionally, the oxidation catalyst composition according to the present invention has typically a structure of $Ce^{4+}$-O-$Mn^{2+}$-O-M, in which it is preferable that a part of the oxidation catalyst composition forms a composite, and it is more preferable that $Ce^{4+}$ and $Mn^{2+}$ form a composite which takes the form of a compound.
Under the effect of such formation of the composite, the oxidation activity at low temperatures can be improved, and additionally burning of particulate matter (hereafter referred to as "PM") can be promoted.

Further, when the oxidation catalyst composition is analyzed by XPS so that orbital energies are subjected to peak separation using the Gaussian function, the $Ce^{4+}$ /$Ce^{3+}$ atomic weight ratio (atomic % ratio) is 1.7 or higher and $Mn^{2+}$ is in an amount of 5 atomic % or larger.
As an abundance ratio of the $Ce^{4+}$ and $Mn^{2+}$ is larger, the formation of composite of Mn and Ce is more promoted. When the $Ce^{4+}$ / $Ce^{3+}$ atomic weight ratio (atomic % ratio) is 1.7 or higher and $Mn^{2+}$ is in an amount of 5 atomic % or larger, the formation of the composite can be accomplished at at least a part of the oxidation catalyst composition, so that an oxidation velocity is also improved.

Furthermore, for the oxidation catalyst composition according to the present invention, it is preferable that cerium, Mn and the metal M coexist in either one of an observation range of particle observation by a transmission electron microscope (TEM) and an observation range corresponding to a column-like area having a diameter of 5 nm and a height of 100 nm in a X-ray analysis.
The coexistence of three substances, Ce, Mn and the metal M provides an advantage of improving the burning velocity of PM.

Next, a PM oxidation catalyst according to the present invention will be discussed.
As discussed above, this PM oxidation catalyst including the above-mentioned oxidation catalyst composition and has an oxidation activity at low temperatures owing to this oxidation catalyst composition. This PM oxidation catalyst can promote the PM oxidation for an internal combustion engine even at low temperatures, and therefore makes it possible to burn PM even at temperatures around 350 °C.
Additionally, this PM oxidation catalyst promotes oxidation of hydrocarbons (HC) and carbon monoxide (CO) emitted from an internal combustion engine and therefore has a function to remove hydrocarbons and carbon monoxide.

In order to dispose the PM oxidation catalyst in an exhaust gas passage of an internal combustion engine, it is possible to cause the oxidation catalyst composition to be carried on a honeycomb-shaped monolithic carrier such as one formed of ceramic or of metal by using conventional and known inorganic base material such as alumina. This can also promote burning of PM and oxidation removal of HC and CO.

EXAMPLES

Hereinafter, the present invention will be discussed with reference to Examples and Comparative Examples; however, the present invention is not limited to these Examples.

(Example 1)

(Preparation of 77%$CeO_2$-8%$Ga_2O_3$-15%$MnO_2$ powder)

Cerium acetate $Ce(CH_3CO_2)_3$, manganese acetate $Mn(CH_3COO)_2$ and gallium nitrate were mixed to prepare a solution. Ammonium was added dropwise in the solution to form precipitate of hydroxide, followed by aging over a whole day and night. Then, the precipitate was filtered and washed with water, and dried at 150 °C. Thereafter, the precipitate was fired at 600 °C in the atmospheric air, thereby obtaining a composite oxide.
The thus obtained composite oxide had a composition of 77% $CeO_2$-8% $Ga_2O_3$-15% $MnO_2$ as the weight of oxides.
Subsequently, the obtained composite oxide was finely pulverized to a level of about 1 $\mu$m diameter by a ball mill thereby obtaining a PM oxidation material of this Example.

[Confirmation of electronic state]

This PM oxidation material underwent an analysis of electronic state for Ce and Mn by XPS thereby making a peak separation thereby separating $Ce^{4+}$, $Ce^{3+}$, $Mn^{3+}$ and $Mn^{2+}$. The respective ion kinds and the composition of the complex oxide are shown in Table 1.

Here, the measuring condition of XPS was mentioned below.

- Apparatus name: Composite-type surface analysis instrument (ESCA-5800) produced by Ulvac-phi, Incorporated
- X-ray source: Mg-K$\alpha$ ray (1253.6 eV) 300W
- Photoelectron taking-out angle: 45 degrees (measuring depth: about 4 nm)
- Measuring area: 2 mm $\times$ 0.8 mm
- Pre-treatment: After pulverization was made in an agate mortar, the PM oxidation material was subjected to a powder-compression forming onto an In foil, followed by undergoing a measurement.

[PM burning test]

The above-mentioned composite oxide and PM at a weight ratio of 1 : 1 were mixed for 20 minutes in an agate mortar. Then, 0.02 g of an obtained mixture was weighed and set in a glass reaction tube of the Quadrupole Mass Spectrometer (Q-MASS apparatus) of a gas analyzer. He gas was flowed at 100 cc/min. through the glass reaction tube, upon which a temperature was raised to a certain level which was maintained for 10 min. After stabilized, a balance gas of $O_2$ 10vol.% He was added at 100 cc/min., upon which an ionic strength (M/Z = 44 (mass number)) of $CO_2$ was monitored thereby measuring a burning behavior.

The condition of the above-mentioned mass spectrometric analysis was mentioned below.

- Apparatus name: Gas analyzer (M-100GA-DM) produced by Canon Anelva Corporation
- Measuring condition:

    Emission: 2.0 mA
    SEM: 800 V
    Sensitivity: 6.15E-8

- Measurement M/Z: 2, 18, 28, 32 and 44

[PM burning velocity]

Immediately after the balance gas of $O_2$ 10vol.% He was introduced in the PM burning test, the ionic strength of $CO_2$ increased thereby confirming PM burning. As PM decreased, the production amount of $CO_2$ decreased. This is assumed to result from the fact that contact of the catalyst and PM gradually reduces.
Accordingly, the real burning velocity of PM was measured by using an initial velocity method used in reaction engineering, in which the linearity of $CO_2$ production concentration relative to time was good for several seconds immediately after the introduction of the $O_2$ 10vol.% He balance gas so that the PM burning velocity was determined according to an equation mentioned below. Obtained results are shown in Table 2.

$$\text{PM burning velocity} = \Delta CO_2 \text{ production quantity} / \Delta \text{time}$$

(Example 2)

(Preparation of 77%$CeO_2$-8%$Y_2O_3$-15%$MnO_2$ powder)

Cerium acetate $Ce(CH_3CO_2)_3$, manganese acetate $Mn(CH_3COO)_2$ and yttrium acetate were mixed to prepare a solution. Ammonium was added dropwise in the solution to form precipitate of hydroxide, followed by aging over a whole day and night. Then, the precipitate was filtered and washed with water, and dried at 150°C. Thereafter, the precipitate was fired at 600 °C in the atmospheric air, thereby obtaining a composite oxide.
The thus obtained composite oxide had a composition of 77% $CeO_2$-8% $Y_2O_3$-15% $MnO_2$ as the weight of oxides.
Subsequently, the obtained composite oxide was finely pulverized to a level of about 1 $\mu$m diameter by a ball mill thereby obtaining a PM oxidation material of this Example.

Similarly to Example 1, the peak separation attributing to Ce and Mn was conducted by the photoelectron spectroscopy. Results are shown together with the oxide composition in Table 1.
Additionally, similarly to Example 1, the PM burning test was conducted thereby determining the PM burning velocity. Obtained results are shown in Table. 2.

[TEM observation]

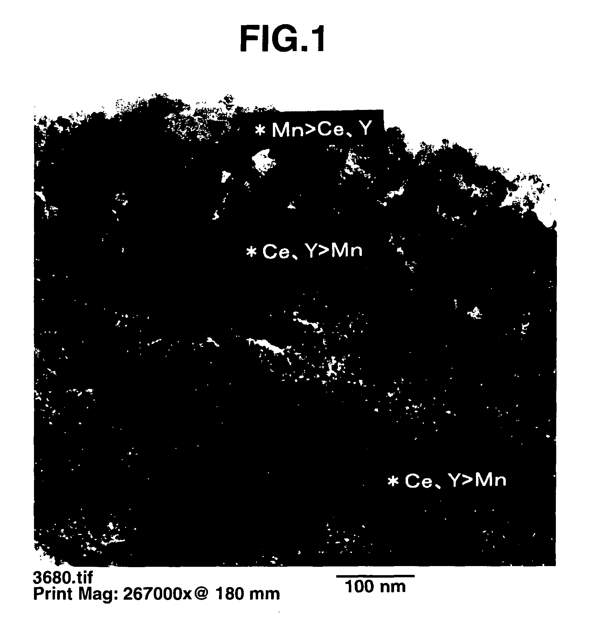

The composite oxide of this Example was observed under TEM (Transmission Electron Microscopy). Results of this observation are shown in Fig. 1. In Fig. 1, * indicates a site for a qualitative analysis, and an inequality sign indicates a small-large relationship in quantity in a measurement site.
The condition of TEM observation is mentioned below.

- Apparatus name: Field emission transmission electron microscope (HF-2000) produced by Hitachi, Ltd.
- Accelerating voltage: 200 kV
- Pre-treatment: A segment by an ultrathin section method was about 100 nm, and a region for quantitative analysis is 5 nm in diameter. Therefore, a measurement place was in the shape of column having a diameter of 5 nm and a depth of 100 nm.

In order to demonstrate that the composite oxide state of Mn is preferable, a Ce-Y composite oxide which previously forms a compound state was impregnated with manganese acetate $Mn(CH_3COO)_2$ (Mn is $Mn^{2+}$), and dried and fired in the same conditions as in the above-mentioned. This is a so-called impregnation method.

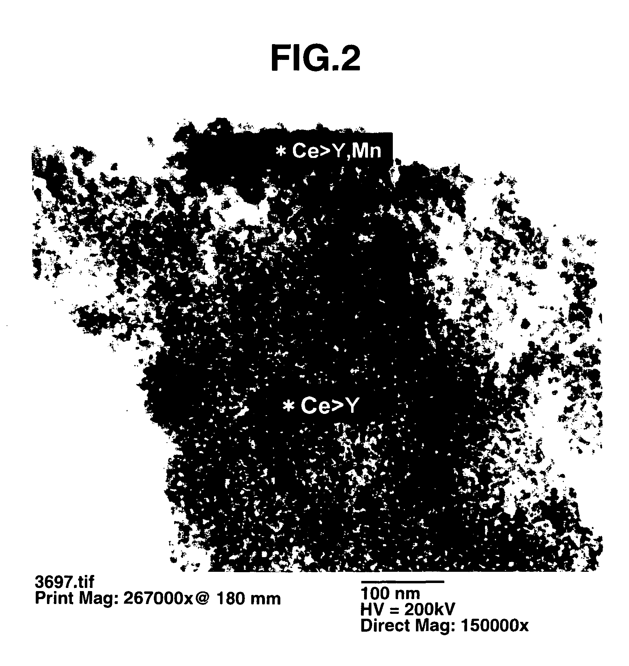

In Fig. 1, Ce, Y and Mn were observed in any observation sites. In Fig. 2, Mn was observed at the surface of particle whereas Mn was not observed inside particle. This means that Mn tends to aggregate but does not form a composite.

(Comparative Example 1)

(Preparation of $77\%CeO_2$-$15\%ZrO_2$-$8\%MnO_2$ powder)

Cerium acetate $Ce(CH_3CO_2)_3$, manganese acetate $Mn(CH_3COO)_2$ and zirconium oxynitrate $ZrO(NO_3)_2 \cdot 2H_2O$ were mixed to prepare a solution. Ammonium was added dropwise in the solution to form precipitate of hydroxide, followed by aging over a whole day and night. Then, the precipitate was filtered and washed with water, and dried at 150 °C. Thereafter, the precipitate was fired at 600 °C in the atmospheric air, thereby obtaining a composite oxide.
The thus obtained composite oxide had a composition of 77% $CeO_2$-15% $ZrO_2$-8% $MnO_2$ as the weight of oxides.
Subsequently, the composite oxide was finely pulverized to a level of about 1 $\mu$m diameter by a ball mill thereby obtaining a PM oxidation material of this Example.
Similarly to Example 1, the peak separation attributing to Ce and Mn was conducted under the photoelectron spectroscopy. Obtained results are shown together with the oxide composition in Table 1.
Similarly to Example 1, the PM burning test was conducted thereby determining the PM burning velocity. Results are shown in Fig. 2.
[Table 1]

| | | Composition | Attribution to Mn | Attribution to Ce | | |
| --- | --- | --- | --- | --- | --- | --- |
| | | | $Mn^{2+}$ quantity | $Ce^{4+}$ quantity | $Ce^{3+}$ | $Ce^{4+}/Ce^{3+}$ ratio |
| | | | Atomic % | Atomic % | Atomic % | |
| | Example 1 | $77wt\%CeO_2$ -$8wt\%Ga_2O_3$ -$15wt\%MnO_2$ | 7.7 | 13.4 | 7.5 | 1.79 |
| | Example 2 | $77wt\%CeO_2$ -$8wt\%Y_2O_3$ -$15wt\%MnO_2$ | 5.6 | 11.5 | 4.5 | 2.56 |
| | Comparative Example 1 | $77wt\%CeO_2$ -$15wt\%ZrO_2$ -$8wt\%MnO_2$ | 3.1 | 9.1 | 5.6 | 1.63 |

[Table 2]

| | Composition | PM burning velocity per 1g of the catalyst at 375 °C |
| --- | --- | --- |
| | | mg/SEC-g·cat |
| Example 1 | 77wt%$CeO_2$ -8wt%$Ga_2O_3$ -15wt%$MnO_2$ | 0.089 |
| Example 2 | 77wt%$CeO_2$ -8wt%$Y_2O_3$ -15wt%$MnO_2$ | 0.053 |
| Comparative Example 1 | 77wt%$CeO_2$ -15wt%$ZrO_2$ -8wt%$MnO_2$ | 0.022 |

## BRIEF DESCRIPTION OF THE DRAWINGS

[Fig. 1] is a TEM observation photograph of a composite oxide of Example 2.

[Fig. 2] is a TEM observation photograph in case that a Ce-Y composite oxide was impregnated with Mn to carry Mn.

## Claims

1. An oxidation catalyst composition comprising:

cerium, manganese, and a metal M (M is a trivalent metal element excluding cerium),
wherein when the oxidation catalyst composition is analyzed by XPS so that orbital energies are subjected to peak separation using the Gaussian function, a $Ce^{4+}$ / $Ce^{3+}$ atomic weight ratio (atomic % ratio) is 1.7 or higher and $Mn^{2+}$ is in an amount of 5 atomic % or larger,
wherein at least a part of the oxidation catalyst composition forms a composite.

2. An oxidation catalyst composition as claimed in Claim 1, wherein the metal M is at least one selected from the group consisting of ytterbium, thulium, erbium, holmium, dysprosium, gadolinium, europium, samarium, promethium, neodymium, praseodymium, scandium, yttrium, aluminum, and gallium.

3. An oxidation catalyst composition as claimed in Claim 1 or 2, wherein cerium, Mn and the metal M coexist in either one of an observation range of particle observation by a transmission electron microscope and an observation range corresponding to a column-like area having a diameter of 5 nm and a height of 100 nm in a X-ray analysis.

4. A PM oxidation catalyst comprising the oxidation catalyst composition as claimed in one of Claims 1 to 3 to oxidize hydrocarbons, carbon monoxide and particulate matter emitted from an internal combustion engine.

# FIG.1

3680.tif
Print Mag: 267000x@ 180 mm

100 nm

# FIG.2

3697.tif
Print Mag: 267000x@ 180 mm

100 nm
HV = 200kV
Direct Mag: 150000x

**EP 2 135 672 A1**

## INTERNATIONAL SEARCH REPORT

| | International application No. |
|---|---|
| | PCT/JP2008/057535 |

A. CLASSIFICATION OF SUBJECT MATTER
*B01J23/34(2006.01)i, B01D53/94(2006.01)i, F01N3/02(2006.01)i, F01N3/10
(2006.01)i, F01N3/24(2006.01)i*

According to International Patent Classification (IPC) or to both national classification and IPC

B. FIELDS SEARCHED

Minimum documentation searched (classification system followed by classification symbols)
B01J21/00-38/74, B01D53/86, B01D53/94

Documentation searched other than minimum documentation to the extent that such documents are included in the fields searched
Jitsuyo Shinan Koho         1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2000-515057 A (Catalytic Solutions, Inc.), 14 November, 2000 (14.11.00), Claims 1, 5, 18, 20 to 22, 59 to 63; page 7, lines 6 to 10 & US 5939354 A        & US 5977017 A & US 2002/0042341 A1   & US 6352955 B1 & US 6372686 B1        & US 7014825 B2 & US 2006/0081922 A1   & EP 1007205 A1 & WO 1997/037760 A1 | 1-4 |
| X | JP 4-40235 A (Riken Corp.), 10 February, 1992 (10.02.92), Claims 1, 3; page 6, upper left column, lines 1 to 2 (Family: none) | 1-4 |

☒ Further documents are listed in the continuation of Box C.     ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 02 July, 2008 (02.07.08) | Date of mailing of the international search report 15 July, 2008 (15.07.08) |
|---|---|
| Name and mailing address of the ISA/ Japanese Patent Office | Authorized officer |
| Facsimile No. | Telephone No. |

Form PCT/ISA/210 (second sheet) (April 2007)

9

**INTERNATIONAL SEARCH REPORT**

| International application No. |
|---|
| PCT/JP2008/057535 |

C (Continuation).    DOCUMENTS CONSIDERED TO BE RELEVANT

| Category* | Citation of document, with indication, where appropriate, of the relevant passages | Relevant to claim No. |
|---|---|---|
| X | JP 7-68176 A  (ICT Co., Ltd.),<br>14 March, 1995 (14.03.95),<br>Par. Nos. [0001], [0055] to [0057], [0067] to [0069]<br>(Family: none) | 1-4 |
| X | JP 2004-42021 A  (Ford Global Technologies, L.L.C.),<br>12 February, 2004 (12.02.04),<br>Par. Nos. [0001], [0046], [0053]<br>& US 2004/0018939 A1    & US 2006/0100097 A1<br>& EP 1356864 A1        & EP 1378288 A2<br>& EP 1378289 A2 | 1-4 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 3657620 B

• JP 3528839 B